# FASCICULE DE BREVET EUROPEEN

(11) **EP 4 194 730 B1**
(45) Date de publication et mention de la délivrance du brevet: **18.09.2024**
(21) Numéro de dépôt: 22315082.2
(22) Date de dépôt: 08.04.2022
(51) Int. Cl.: F16L 3/137, F16L 3/233

(54) **COLLIER DE SERRAGE**
SCHLAUCHKLEMME
CLAMPING COLLAR

(30) Priorité: 06.05.2021 EP 21172614
(43) Date de publication de la demande: 14.06.2023
(73) Titulaire: Illinois Tool Works, Inc., Glenview, Illinois 60025 (US)
(72) Inventeur: DORSCHNER, Stephane, Glenview, 60025 (US); DURAND, Eric, Glenview, 60025 (US); KUHM, Michel, Glenview, 60025 (US); LANG, Eric, Glenvie, 60025 (US)
(74) Mandataire: HGF

(56) Documents cités:
- FR-A1- 2 790 796
- FR-A1- 2 901 924
- US-A- 6 149 109

## Description

### Domaine technique de l'invention

L'invention concerne le domaine des collier de serrage pour fixer un faisceau de câbles à un support. Plus précisément, mais pas exclusivement, cette invention concerne un collier de serrage pour fixer un faisceau de câbles à une carrosserie de véhicule.

### Arrière-plan technique

Les dispositifs conventionnels d'attache de câbles de ce type sont moulés intégralement à partir d'une résine synthétique. Le dispositif comprend généralement un long ruban flexible comportant des dents d'engagement sur au moins une partie de sa longueur, un corps définissant un passage pour l'insertion du ruban flexible à travers celui-ci et un verrou déformable associé au passage du corps pour engager les dents. Lors de l'utilisation, le ruban flexible est enroulé autour du faisceau de câbles et inséré dans le passage, jusqu'à ce que le faisceau de câbles soit étroitement entouré par le ruban flexible. Le verrou s'engage dans les dents du ruban flexible pour verrouiller le ruban flexible en place et empêcher son retrait du passage.

DE202016106524 et US2008093511 ainsi que FR2790796 et FR2901924 divulguent un dispositif d'attache de câble dans lequel le corps est muni d'une bride conique avec une paire de pieds d'ancrage opposés qui font saillie vers l'extérieur sous la bride. Cela permet d'insérer le corps dans un trou d'un panneau de carrosserie de véhicule, ce qui pousse les pieds d'ancrage l'un vers l'autre jusqu'à ce qu'un bord extérieur de la bride s'engage dans le panneau. La poursuite de l'insertion déforme la bride, jusqu'à ce que les pieds d'ancrage émergent du côté opposé du trou, où ils s'enclenchent pour s'engager dans le panneau. Dans cet état, le corps est fixé à l'intérieur du trou, tandis que la bride pousse les pieds d'ancrage en prise avec la partie du panneau entourant le trou.

La présente invention propose un perfectionnement à cette technologie.

### Résumé de l'invention

L'invention concerne un collier de serrage selon la revendication 1.

La région de faiblesse permet au verrou d'être encouragé à se déformer d'une manière prédéterminée. Par exemple, la région de faiblesse peut être configurée pour encourager le verrou à pivoter vers le ruban flexible, de telle sorte qu'une force de rétraction appliquée, en cours d'utilisation, au ruban flexible lorsqu'il est engagé avec le verrou, pousse le verrou à s'engager davantage avec le ruban flexible.

Selon un mode de réalisation de l'invention, le verrou comprend un bras de verrouillage dépendant du corps de montage avec au moins une dent de verrouillage pour s'engager avec les dents du ruban flexible et la région affaiblie est fournie par une partie rétrécie du bras de verrouillage. Selon un mode de réalisation de l'invention, le verrou peut comprendre un bras de verrouillage. Le bras de verrouillage peut dépendre du corps de montage. Le bras de verrouillage peut avoir au moins une dent de verrouillage, par exemple pour s'engager avec les dents du ruban flexible. L'au moins une dent de verrouillage peut se trouver au niveau ou à proximité d'une extrémité libre du bras de verrouillage. La dent de verrouillage peut faire saillie du bras de verrouillage à un angle tel qu'une force de rétraction appliquée, en utilisation, au ruban flexible lorsqu'il est engagée avec le verrou pousse le bras de verrouillage en prise supplémentaire avec le ruban flexible.

Selon un mode de réalisation de l'invention, la dent de verrouillage peut faire saillie du bras de verrouillage à un angle tel qu'une force de rétraction appliquée, en utilisation, au ruban flexible lorsqu'il est engagée avec le verrou pousse le bras de verrouillage à s'engager davantage avec le ruban flexible. La dent de verrouillage peut faire saillie ou s'étendre à partir du bras de verrouillage dans une direction s'éloignant de la connexion entre le ruban flexible et le corps de montage. L'au moins une dent de verrouillage peut comprendre une pluralité de dents de verrouillage, par exemple trois dents de verrouillage, qui peuvent être espacées le long du bras de verrouillage.

La région affaiblie peut être fournie par une partie rétrécie du bras de verrouillage. L'épaisseur du bras de verrouillage dans la partie rétrécie peut être réduite d'au moins un quart, de préférence d'au moins un tiers, par exemple d'environ ou d'au moins la moitié. Le bras de verrouillage peut comprendre un évidement sur au moins un de ses côtés.

Selon un mode de réalisation de l'invention, le bras de verrouillage peut comprendre un évidement sur le même côté que les dents de verrouillage. Le bras de verrouillage peut comprendre un évidement sur son côté opposé aux dents de verrouillage. L'évidement du même côté que les dents de verrouillage peut être plus profond que l'évidement du côté opposé.

La profondeur de l'évidement du même côté que les dents de verrouillage peut être d'au moins 20% de l'épaisseur du bras de verrouillage. La profondeur de l'évidement du même côté que les dents de verrouillage est de préférence d'au moins 30% de l'épaisseur du bras de verrouillage. La profondeur de l'évidement du même côté que les dents de verrouillage est de préférence au moins égale à 40% de l'épaisseur du bras de verrouillage. La profondeur de l'évidement du même côté que les dents de verrouillage peut représenter environ la moitié de l'épaisseur du bras de verrouillage.

Selon un mode de réalisation de l'invention, la ou les dents de verrouillage est(sont) disposées au niveau de l'extrémité du bras de verrouillage.

Selon un mode de réalisation de l'invention, le bras de verrouillage est renforcé en épaisseur au niveau des dents de verrouillage.

Selon un mode de réalisation de l'invention, le ruban flexible présente une courbure en son extrémité non libre.

Selon un mode de réalisation de l'invention, le passage comprend une entrée élargie pour s'adapter à un rayon de courbure du ruban flexible.

L'entrée élargie permet donc une courbe plus graduelle que les cols conventionnels. Cela permet de rapprocher le faisceau de câbles au corps, et donc au support sur lequel le collier est monté.

Selon un mode de réalisation de l'invention, le passage comprend une transition chanfreinée depuis l'entrée élargie vers le verrou.

Le passage peut comprendre une transition, par exemple de l'entrée élargie et/ou vers le verrou. Le verrou ou le bras de verrouillage peut comprendre au moins une partie de la transition. Le corps de montage peut comprendre au moins une partie de la transition.

Selon un mode de réalisation de l'invention, le passage comprend une transition par palier depuis l'entrée élargie vers le verrou.

La transition peut être chanfreinée ou peut comprendre une partie chanfreinée. Le verrou peut être chanfreiné ou peut comprendre la partie chanfreinée, par exemple pour fournir au moins une partie de la transition. En outre, ou alternativement, le corps de montage peut être chanfreiné ou comprendre la partie chanfreinée, par exemple pour fournir au moins une partie de la transition.

La transition peut être une transition par palier ou peut être étagée ou peut comprendre une partie étagée. Le verrou peut comprendre la transition par palier. Le verrou peut être étagé ou peut comprendre la partie étagée, par exemple pour fournir au moins une partie de la transition. En outre ou alternativement, le corps de montage peut être une transition par palier. Le corps de montage peut être étagé ou comprendre la partie étagée, par exemple pour fournir au moins une partie de la transition.

Selon un mode de réalisation de l'invention, lequel le corps de montage comprend une bride et le passage est décrit entre le verrou et un guide-ruban, le guide-ruban étant espacé de la bride pour créer une ouverture entre eux qui est plus étroite que l'extrémité libre du ruban flexible.

Le guide-ruban et le verrou peuvent décrire au moins une partie du passage entre eux. Le guide-ruban peut comprendre la transition ou une autre transition, par exemple de l'entrée élargie et/ou à proximité de l'entrée élargie et/ou vers le verrou. La transition du guide-ruban peut être chanfreinée ou le guide-ruban peut comprendre une partie chanfreinée. La transition du guide-ruban peut être étagée ou le guide-ruban peut comprendre une partie étagée.

Le corps de montage peut comprendre une bride. La bride peut être effilée, conique ou tronconique. La bride peut s'effiler, par exemple vers l'extérieur, depuis une ouverture du passage vers le verrou et/ou vers le dispositif de fixation. La bride peut s'effiler, par exemple vers l'extérieur, depuis sa connexion avec le ruban flexible vers le verrou et/ou vers le dispositif de fixation.

Le canal de réception peut être former dans la bride. Le canal de réception du ruban flexible peut décrire au moins une partie de l'entrée élargie du passage.

Le guide-ruban peut être espacé de la bride pour créer une ouverture entre eux. L'ouverture peut être plus étroite qu'une extrémité libre du ruban flexible.

Le dispositif de fixation peut comprendre un ou plusieurs pieds d'ancrage. Le ou les pieds d'ancrage peuvent comprendre une paire de pieds d'ancrage opposés. Le corps de montage peut comprendre un noyau, par exemple à partir duquel s'étendent les pieds d'ancrage. Les pieds d'ancrage peuvent s'étendre vers le haut et/ou vers l'extérieur, par exemple à partir d'une extrémité inférieure du noyau et/ou vers la bride. Le noyau peut dépendre de la bride. Le noyau peut comprendre le guide-ruban. Le noyau peut comprendre un dispositif de centrage, par exemple une paire de coins opposés.

Le dispositif de fixation peut être configuré pour être inséré, en cours d'utilisation, dans un trou d'un panneau de carrosserie de véhicule, par exemple de telle sorte que les pieds d'ancrage soient poussés l'un vers l'autre jusqu'à ce qu'ils émergent du côté opposé du trou, où ils s'enclenchent en place pour s'engager dans le panneau. Le collier peut être configuré de telle sorte que l'insertion, en cours d'utilisation, du dispositif de fixation dans le trou de la carrosserie du véhicule amène la bride à s'engager dans le panneau et à solliciter les pieds d'ancrage pour qu'ils s'engagent dans la partie du panneau entourant le trou.

Le ou chaque pied d'ancrage peut comprendre au moins un épaulement, par exemple pour s'engager dans une partie de panneau entourant un trou dans lequel le dispositif de fixation est inséré. L'au moins un épaulement peut comprendre deux épaulements ou plus, qui peuvent être prévus dans une configuration en escalier. En variante, le dispositif de fixation peut comprendre deux ou plusieurs pieds d'ancrage espacés sur la longueur ou dans la direction d'insertion du dispositif de fixation. Le dispositif de fixation peut comprendre pieds d'ancrage en forme de sapin.

Ces configurations permettent au dispositif de fixation d'être inséré dans un engagement plus robuste avec le panneau et/ou de s'adapter à des panneaux d'épaisseurs différentes.

Selon un mode de réalisation de l'invention, le corps de montage comprend deux nervures disposées de part et d'autre de l'extrémité non libre du ruban flexible.

Selon un mode de réalisation de l'invention, le passage comprend une entrée élargie pour s'adapter à un rayon de courbure du ruban flexible.

L'entrée élargie permet donc une courbe plus graduelle que les cols conventionnels. Cela permet de rapprocher le faisceau de câbles au corps, et donc au support sur lequel le collier est monté.

Selon l'invention dans au moins un de ses modes de réalisation, le verrou est relié au corps de montage via une région affaiblie décrivant une charnière autour de laquelle le verrou est capable de pivoter.

La région de faiblesse permet au verrou d'être encouragé à se déformer d'une manière prédéterminée. Par exemple, la région de faiblesse peut être configurée pour encourager le verrou à pivoter vers le ruban flexible, de telle sorte qu'une force de rétraction appliquée, en cours d'utilisation, au ruban flexible lorsqu'il est engagé avec le verrou, pousse le verrou à s'engager davantage avec le ruban flexible.

Selon un mode de réalisation de l'invention, le verrou comprend un bras de verrouillage dépendant du corps de montage avec au moins une dent de verrouillage pour s'engager avec les dents du ruban flexible et la région affaiblie est fournie par une partie rétrécie du bras de verrouillage. Selon un mode de réalisation de l'invention, le verrou peut comprendre un bras de verrouillage. Le bras de verrouillage peut dépendre du corps de montage. Le bras de verrouillage peut avoir au moins une dent de verrouillage, par exemple pour s'engager avec les dents du ruban flexible. L'au moins une dent de verrouillage peut se trouver au niveau ou à proximité d'une extrémité libre du bras de verrouillage. La dent de verrouillage peut faire saillie du bras de verrouillage à un angle tel qu'une force de rétraction appliquée, en utilisation, au ruban flexible lorsqu'il est engagée avec le verrou pousse le bras de verrouillage en prise supplémentaire avec le ruban flexible.

Selon un mode de réalisation de l'invention, la dent de verrouillage peut faire saillie du bras de verrouillage à un angle tel qu'une force de rétraction appliquée, en utilisation, au ruban flexible lorsqu'il est engagée avec le verrou pousse le bras de verrouillage à s'engager davantage avec le ruban flexible. La dent de verrouillage peut faire saillie ou s'étendre à partir du bras de verrouillage dans une direction s'éloignant de la connexion entre le ruban flexible et le corps de montage. L'au moins une dent de verrouillage peut comprendre une pluralité de dents de verrouillage, par exemple trois dents de verrouillage, qui peuvent être espacées le long du bras de verrouillage.

La région affaiblie peut être fournie par une partie rétrécie du bras de verrouillage. L'épaisseur du bras de verrouillage dans la partie rétrécie peut être réduite d'au moins un quart, de préférence d'au moins un tiers, par exemple d'environ ou d'au moins la moitié. Le bras de verrouillage peut comprendre un évidement sur au moins un de ses côtés.

Selon un mode de réalisation de l'invention, le bras de verrouillage peut comprendre un évidement sur le même côté que les dents de verrouillage. Le bras de verrouillage peut comprendre un évidement sur son côté opposé aux dents de verrouillage. L'évidement du même côté que les dents de verrouillage peut être plus profond que l'évidement du côté opposé.

La profondeur de l'évidement du même côté que les dents de verrouillage peut être d'au moins 20% de l'épaisseur du bras de verrouillage. La profondeur de l'évidement du même côté que les dents de verrouillage est de préférence d'au moins 30% de l'épaisseur du bras de verrouillage. La profondeur de l'évidement du même côté que les dents de verrouillage est de préférence au moins égale à 40% de l'épaisseur du bras de verrouillage. La profondeur de l'évidement du même côté que les dents de verrouillage peut représenter environ la moitié de l'épaisseur du bras de verrouillage.

Selon un mode de réalisation de l'invention, la ou les dents de verrouillage est(sont) disposées au niveau de l'extrémité du bras de verrouillage.

Selon un mode de réalisation de l'invention, le bras de verrouillage est renforcé en épaisseur au niveau des dents de verrouillage.

Selon un mode de réalisation de l'invention, le ruban flexible présente une courbure en son extrémité non libre.

Selon un mode de réalisation de l'invention, le passage comprend une transition chanfreinée depuis l'entrée élargie vers le verrou.

Le passage peut comprendre une transition, par exemple de l'entrée élargie et/ou vers le verrou. Le verrou ou le bras de verrouillage peut comprendre au moins une partie de la transition. Le corps de montage peut comprendre au moins une partie de la transition.

Selon un mode de réalisation de l'invention, le passage comprend une transition par palier depuis l'entrée élargie vers le verrou.

La transition peut être chanfreinée ou peut comprendre une partie chanfreinée. Le verrou peut être chanfreiné ou peut comprendre la partie chanfreinée, par exemple pour fournir au moins une partie de la transition. En outre, ou alternativement, le corps de montage peut être chanfreiné ou comprendre la partie chanfreinée, par exemple pour fournir au moins une partie de la transition.

La transition peut être une transition par palier ou peut être étagée ou peut comprendre une partie étagée. Le verrou peut comprendre la transition par palier. Le verrou peut être étagé ou peut comprendre la partie étagée, par exemple pour fournir au moins une partie de la transition. En outre ou alternativement, le corps de montage peut être une transition par palier. Le corps de montage peut être étagé ou comprendre la partie étagée, par exemple pour fournir au moins une partie de la transition.

Selon un mode de réalisation de l'invention, lequel le corps de montage comprend une bride et le passage est décrit entre le verrou et un guide-ruban, le guide-ruban étant espacé de la bride pour créer une ouverture entre eux qui est plus étroite que l'extrémité libre du ruban flexible.

Le collier ou le corps de montage peut comprendre un guide-ruban. Au moins une partie du guide-ruban peut décrire au moins une partie du passage. Le guide-ruban et le verrou peuvent décrire au moins une partie du passage entre eux. Le guide-ruban peut comprendre la transition ou une autre transition, par exemple de l'entrée élargie et/ou à proximité de l'entrée élargie et/ou vers le verrou. La transition du guide-ruban peut être chanfreinée ou le guide-ruban peut comprendre une partie chanfreinée. La transition du guide-ruban peut être étagée ou le guide-ruban peut comprendre une partie étagée.

Le corps de montage peut comprendre une bride. La bride peut être effilée, conique ou tronconique. La bride peut s'effiler, par exemple vers l'extérieur, depuis une ouverture du passage vers le verrou et/ou vers le dispositif de fixation. La bride peut s'effiler, par exemple vers l'extérieur, depuis sa connexion avec le ruban flexible vers le verrou et/ou vers le dispositif de fixation.

Le corps de montage peut comprendre un canal de réception pour le ruban flexible. Le canal de réception peut être former dans la bride. Le canal de réception peut être perpendiculaire au guide-ruban. Le canal de réception du ruban flexible peut décrire au moins une partie de l'entrée élargie du passage.

Le guide-ruban peut être espacé de la bride pour créer une ouverture entre eux. L'ouverture peut être plus étroite qu'une extrémité libre du ruban flexible.

Le dispositif de fixation peut comprendre un ou plusieurs pieds d'ancrage. Le ou les pieds d'ancrage peuvent comprendre une paire de pieds d'ancrage opposés. Le corps de montage peut comprendre un noyau, par exemple à partir duquel s'étendent les pieds d'ancrage. Les pieds d'ancrage peuvent s'étendre vers le haut et/ou vers l'extérieur, par exemple à partir d'une extrémité inférieure du noyau et/ou vers la bride. Le noyau peut dépendre de la bride. Le noyau peut comprendre le guide-ruban. Le noyau peut comprendre un dispositif de centrage, par exemple une paire de coins opposés.

Le dispositif de fixation peut être configuré pour être inséré, en cours d'utilisation, dans un trou d'un panneau de carrosserie de véhicule, par exemple de telle sorte que les pieds d'ancrage soient poussés l'un vers l'autre jusqu'à ce qu'ils émergent du côté opposé du trou, où ils s'enclenchent en place pour s'engager dans le panneau. Le collier peut être configuré de telle sorte que l'insertion, en cours d'utilisation, du dispositif de fixation dans le trou de la carrosserie du véhicule amène la bride à s'engager dans le panneau et à solliciter les pieds d'ancrage pour qu'ils s'engagent dans la partie du panneau entourant le trou.

Le ou chaque pied d'ancrage peut comprendre au moins un épaulement, par exemple pour s'engager dans une partie de panneau entourant un trou dans lequel le dispositif de fixation est inséré. L'au moins un épaulement peut comprendre deux épaulements ou plus, qui peuvent être prévus dans une configuration en escalier. En variante, le dispositif de fixation peut comprendre deux ou plusieurs pieds d'ancrage espacés sur la longueur ou dans la direction d'insertion du dispositif de fixation. Le dispositif de fixation peut comprendre pieds d'ancrage en forme de sapin.

Ces configurations permettent au dispositif de fixation d'être inséré dans un engagement plus robuste avec le panneau et/ou de s'adapter à des panneaux d'épaisseurs différentes.

Selon un mode de réalisation de l'invention, le corps de montage comprend deux nervures disposées de part et d'autre de l'extrémité non libre du ruban flexible.

Pour éviter tout doute, toutes les caractéristiques décrites ici s'appliquent également à tout aspect de l'invention.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue en perspective d'un collier selon un premier mode de réalisation de l'invention ;
[Fig. 2] la figure 2 est une vue en coupe du corps de montage du collier de la figure 1 ;
[Fig. 3] la figure 3 est une vue similaire à celle de la figure 2 montrant le rayon de courbure du ruban flexible à l'entrée du passage ;
[Fig. 4] la figure 4 est une vue en coupe d'un autre corps de montage ;
[Fig. 5] la figure 5 est une vue en coupe d'un autre corps de montage alternatif ;
[Fig. 6] la figure 6 est une vue en coupe d'un autre corps de montage alternatif ;
[Fig. 7] la figure 7 est une vue en coupe d'un autre corps de montage alternatif ;
[Fig. 8] la figure 8 est une vue en coupe d'un corps de montage d'un collier selon un second mode de réalisation de l'invention ;
[Fig. 9] la figure 9 est une vue similaire à celle de la figure 8 montrant le rayon de courbure du ruban flexible à l'entrée du passage ;
[Fig. 10] la figure 10 illustre le dispositif de fixation du collier de la figure 8.

### Description détaillée de l'invention

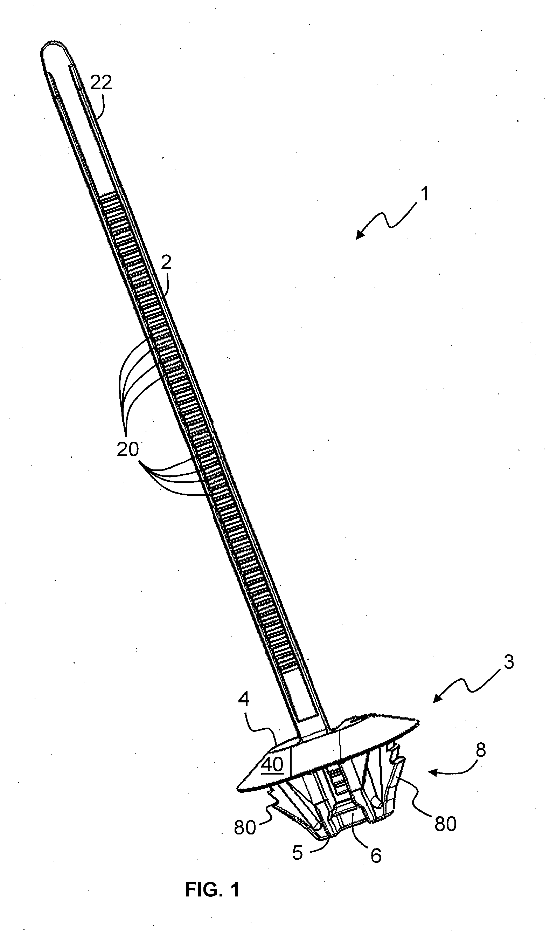

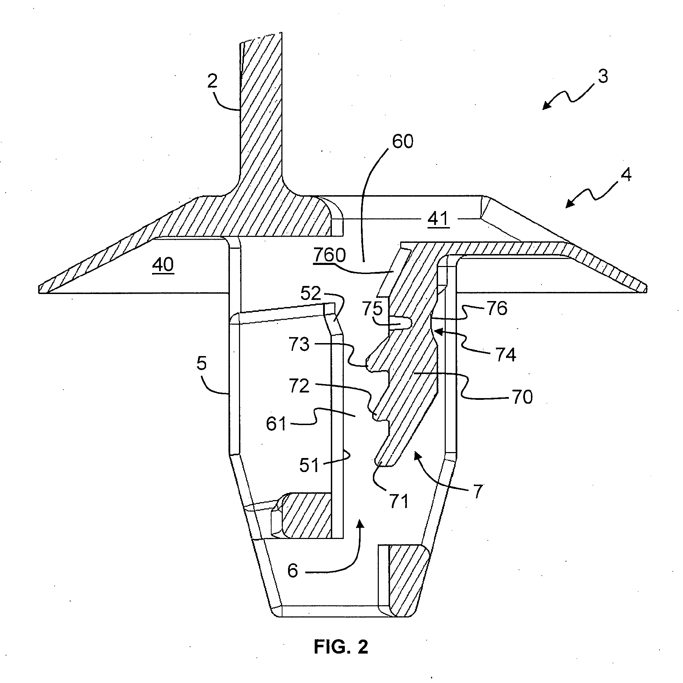

La figure 1 illustre un collier de serrage 1 selon un premier mode de réalisation de l'invention. Un tel collier de serrage 1 permet de fixer un faisceau de câbles à un support. Le collier 1 comprend un ruban flexible 2 avec des dents 20 sur une partie de sa longueur et un corps de montage 3 relié au ruban flexible 2 à l'une de ses extrémités. Le corps de montage 3 est illustré plus clairement à la figure 2, et comprend une bride 4, un noyau 5 dépendant de la bride 4, un passage 6 pour recevoir l'extrémité libre 22 du ruban flexible 2, un verrou 7 dépendant de la bride 4 et destiné à s'engager dans les dents 20 du ruban flexible 2 lorsqu'elle est insérée dans le passage 6 et un dispositif de fixation 8 aussi dépendant de la bride 4 pour s'engager dans un panneau de véhicule afin de fixer le collier 1 au panneau.

Par exemple, les dents 20 présentent un pas de quelques millimètres, et par exemple un pas de 1 mm par exemple pour optimiser le serrage. Bien entendu tout autre pas de dents 20 peut être mis en oeuvre (par exemple 1,5mm ou 2 mm).

La bride 4 a la forme d'un disque tronconique 40, qui est relié à son sommet au ruban flexible 2 et qui s'écarte vers l'extérieur en direction du dispositif de fixation 8. Un canal de réception de ruban 41 permettant la réception du ruban flexible est formé dans la bride 4, et s'étend radialement à partir du passage 6.

Le noyau 5 décrit un guide de ruban 51, qui s'étend de façon perpendiculaire par rapport au canal de réception de ruban 41 formé dans la bride 4. Dans cet exemple, le guide-ruban 51 comprend une partie supérieur chanfreiné 52 pour s'adapter à un rayon de courbure du ruban flexible 2.

Le passage 6 comprend une entrée élargie 60 et une section intermédiaire 61 qui est décrite entre le guide-ruban 51 et le verrou 7. L'entrée élargie 60 est prévue pour s'adapter à un rayon de courbure du ruban flexible 2.

Le verrou 7 comprend un bras de verrouillage 70, qui dépend de la bride 4 et qui porte trois dents de verrouillage 71, 72, 73 pour s'engager avec les dents 20 du ruban flexible 2. Ainsi, par exemple, les dents de verrouillage 71, 72, 73 présentent un pas de quelques millimètres, et par exemple un pas de 1 mm par exemple pour optimiser le serrage. Bien entendu tout autre pas de dents de verrouillage peut être mis en oeuvre (par exemple 1,5mm ou 2 mm). Avantageusement, le pas des dents 20 du ruban flexible est identique au pas des dents de verrouillage 71, 72, 73. Il peut cependant être différent ou légèrement différent.

La dent de verrouillage 71 à l'extrémité libre du bras de verrouillage 70 s'étend à partir du bras de verrouillage 70 selon un angle, en s'éloignant de la bride 4. La dent de verrouillage intermédiaire 72 s'étend selon un angle similaire, tandis que la dent de verrouillage proximale 73 fait saillie selon un angle qui est presque perpendiculaire au bras de verrouillage 70.

Selon un mode de réalisation de l'invention, le verrou 7 est relié au corps de montage 3 via une région affaiblie 74 décrivant une charnière autour de laquelle le verrou 7 est capable de pivoter.

Ainsi, par exemple, le bras de verrouillage 70 comprend également la région affaiblie 74 qui est par exemple une partie rétrécie 74 entre la dent de verrouillage proximale 73 et sa connexion avec la bride 4. Par exemple, la partie rétrécie 74 décrit une charnière autour de laquelle le verrou 7 est capable de pivoter. La partie rétrécie 74 est décrite par un premier évidement 75, qui s'étend dans le bras de verrouillage 70 du même côté que les dents de verrouillage 71, 72, 73, et un second évidement 76, du côté opposé. Le premier évidement 75 est étroit et profond, tandis que le second évidement 76 est peu profond et large. L'épaisseur du bras de verrouillage 70 dans la partie rétrécie 74 est réduite de plus de la moitié.

La configuration de la partie rétrécie 74, en particulier la présence d'un premier évidement plus profond 75 du même côté que les dents de verrouillage 71, 72, 73, encourage le verrou 7 à pivoter vers le ruban flexible 2 lorsqu'une force de rétraction est appliquée, en service, au ruban flexible 2. Ceci, à son tour, pousse les dents de verrouillage 71, 72, 73 du verrou 7 à s'engager davantage avec les dents 20 du ruban flexible 2. L'angle de la dent de verrouillage 71 à l'extrémité libre du bras de verrouillage 70 encourage ce phénomène, agissant de concert avec la configuration de la partie rétrécie 74 pour le renforcer.

Selon un mode de réalisation de l'invention, le passage 6 comprend une transition chanfreinée 760 depuis l'entrée élargie 60 vers le verrou 7.

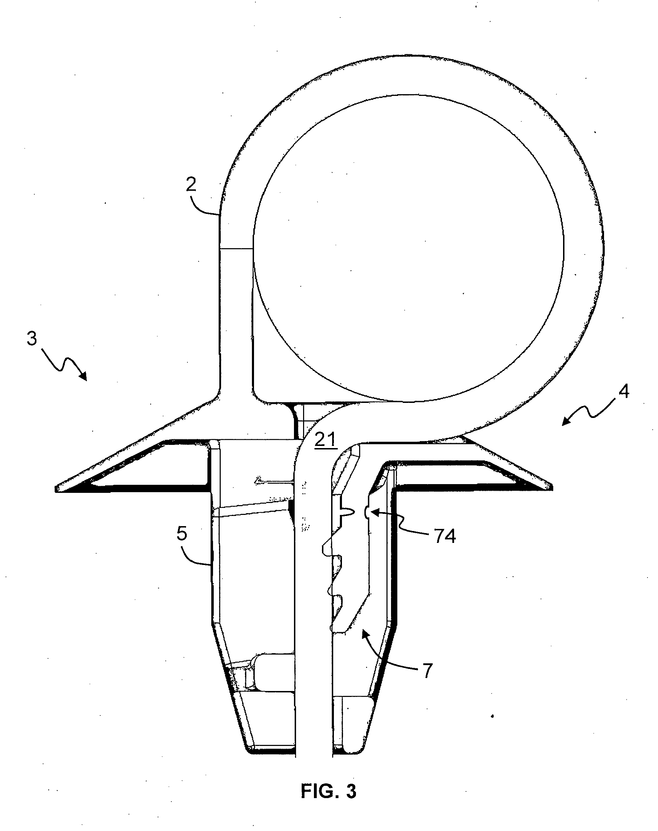

Par exemple, la transition chanfreinée 760 est une zone de liaison 760 entre le bras de verrouillage 70 et le canal de réception de ruban 41 de la bride 4. Cette zone de liaison 760 est par exemple chanfreinée (ci-après également appelée zone de liaison chanfreinée 760), de manière à décrire une partie de l'entrée élargie 60 du passage 6. Plus précisément, l'entrée élargie 60 est décrite entre le canal de réception de ruban 41, la zone de liaison chanfreinée 760 du verrou 7 et la partie supérieur chanfreiné 52 du guide-ruban 51. Comme l'illustre plus clairement la figure 3, cela permet au ruban flexible 2 de former un coude 21 plus graduel ayant un plus grand rayon de courbure.

Le dispositif de fixation 8 comprend une paire de pieds d'ancrage 80 opposés, qui s'étendent depuis une extrémité inférieure du noyau 5, vers la bride 4. Le dispositif de fixation 8 est configuré pour être inséré, une fois le ruban flexible 2 verrouillé en place par le verrou 7, dans un trou d'un panneau de carrosserie de véhicule. Les pieds d'ancrage 80 sont alors poussés l'un vers l'autre jusqu'à ce qu'ils émergent du côté opposé du trou, où ils s'enclenchent en place pour s'engager dans le panneau. La distance entre les pieds d'ancrage 80 et la bride 4 amène également la bride 4 à s'engager dans le panneau et à solliciter les pieds d'ancrage 80 pour qu'ils s'engagent dans la partie du panneau entourant le trou.

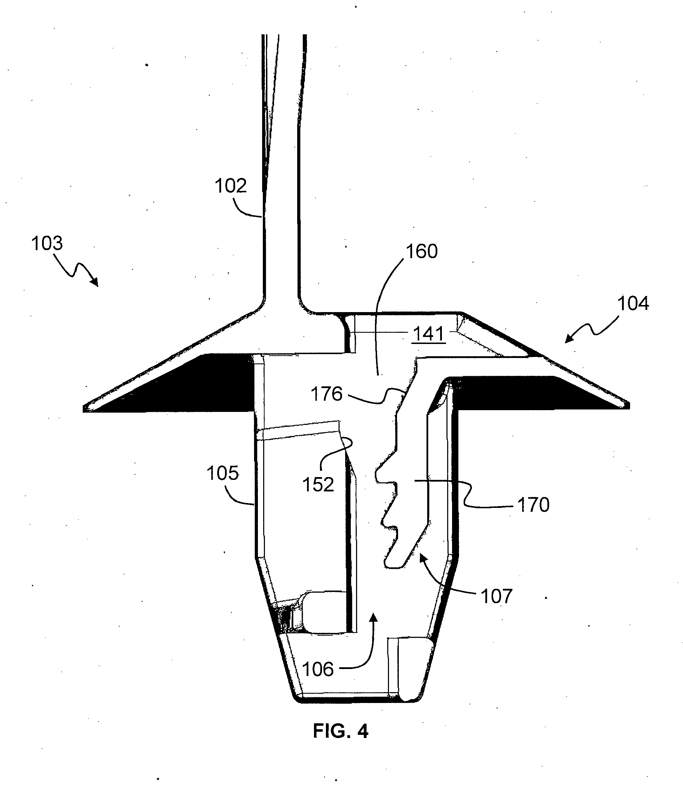

La figure 4 montre un corps de montage montre un corps de montage 103 selon un autre exemple, dans lequel les caractéristiques similaires sont identifiées par des références similaires incrémentées par 100 et ne seront pas décrites davantage. Le corps de montage 103 selon cet exemple diffère du corps de montage 3 décrit ci-dessus en ce que la partie rétrécie 74 est omise.

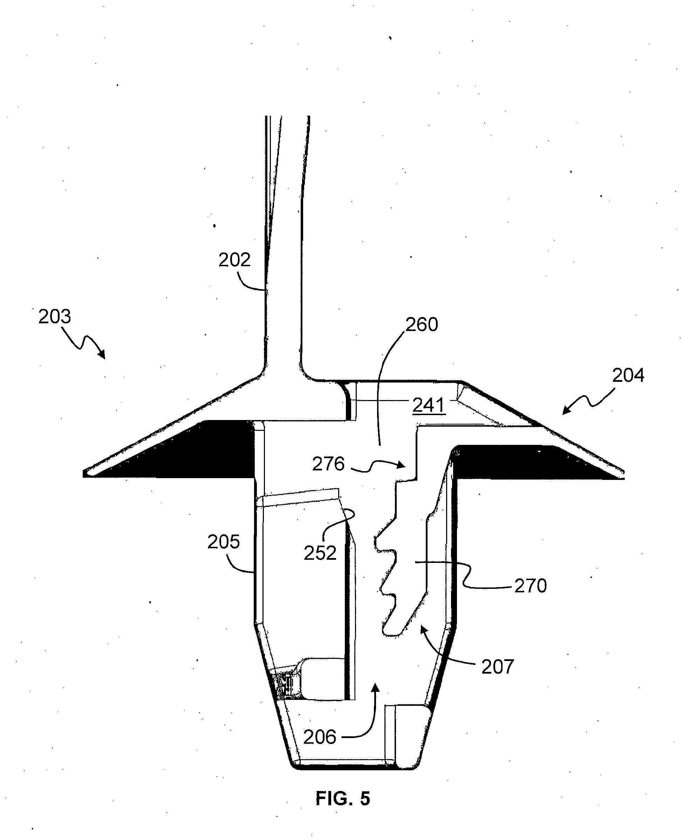

La figure 5 illustre un corps de montage 203 selon un autre exemple, dans lequel les caractéristiques similaires sont identifiées par des références similaires incrémentées par 200 et ne seront pas décrites davantage. Le corps de montage 203 selon cet exemple diffère du corps de montage 103 de l'exemple immédiatement précédent en ce que la région 276 joignant le bras de verrouillage 270 et le canal de réception de ruban 241 comprend une transition par palier au lieu d'une transition chanfreinée.

Ainsi, par exemple, le passage comprend une transition par palier 276 depuis l'entrée élargie vers le verrou.

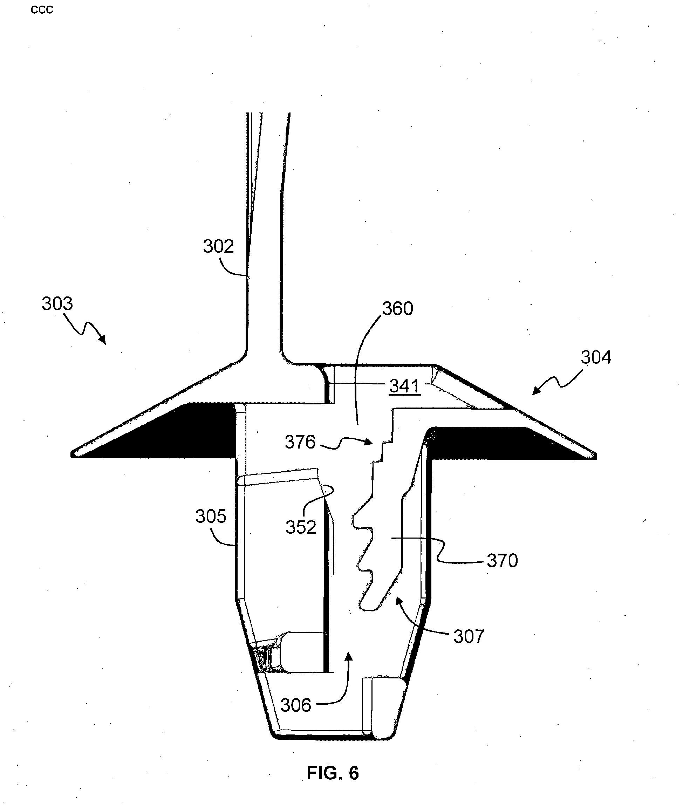

La figure 6 illustre un corps de montage 303 selon encore un autre exemple, dans lequel les caractéristiques similaires sont identifiées par des références similaires incrémentées par 300 et ne seront pas décrites davantage. Le corps de montage 303 selon cet exemple diffère du corps de montage 203 de l'exemple immédiatement précédent en ce qu'une région de transition par palier 376 joignant le bras de verrouillage 370 et le canal de réception de ruban 241 comprend une étage supplémentaire.

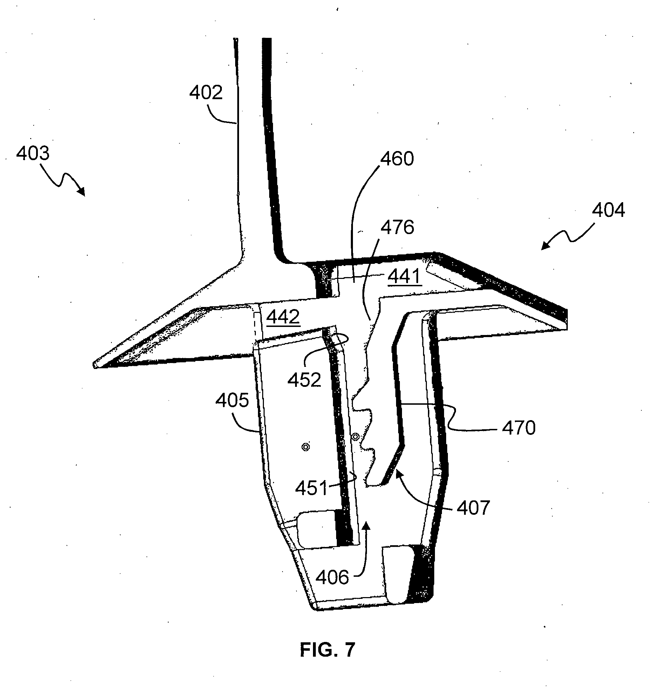

La figure 7 illustre un corps de montage 403 selon encore un autre exemple, dans lequel les caractéristiques similaires sont identifiées par des références similaires incrémentées par 400 et ne seront pas décrites davantage. Le corps de montage 403 selon cet exemple diffère du corps de montage 103 de l'exemple précédent en ce que la partie supérieur chanfreiné 452 du guide-ruban 451 est plus proche du canal de réception de ruban 441. Ainsi, l'ouverture 442 entre le guide-ruban 451 et la bride 4 est réduite. Dans cet exemple, cette ouverture 442 est plus étroite que l'extrémité libre 22 du ruban flexible 2 pour empêcher l'insertion par inadvertance du ruban flexible 2 dans cette ouverture 442.

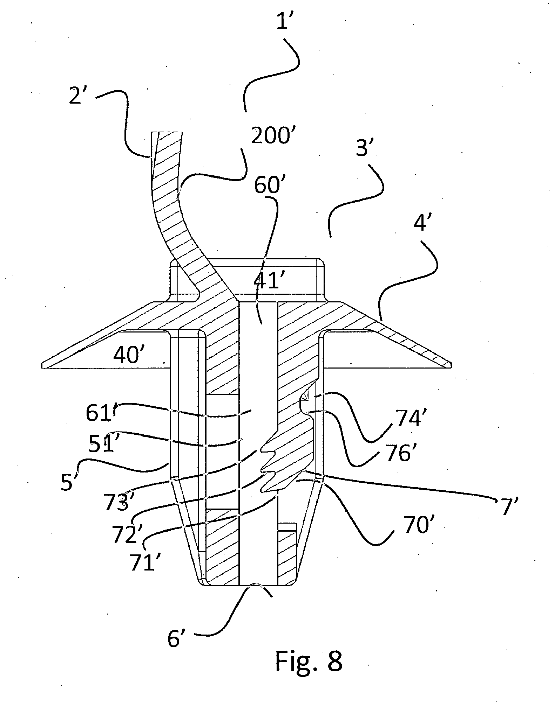

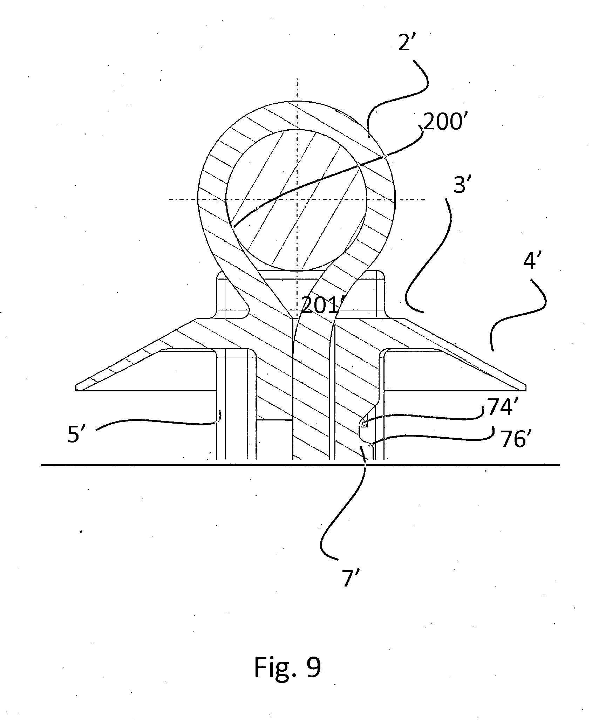

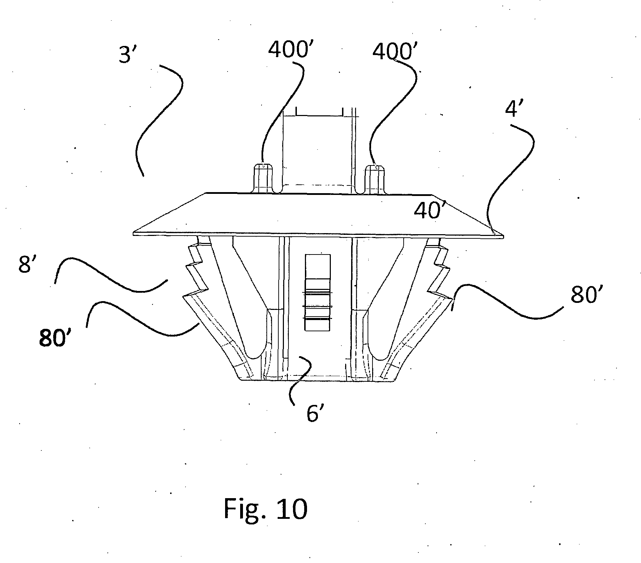

La figure 8 illustre un collier de serrage 1' selon un second mode de réalisation de l'invention. Un tel collier de serrage 1' permet de fixer un faisceau de câbles à un support. Le collier 1' comprend un ruban flexible 2' avec des dents (non représentées) sur une partie de sa longueur et un corps de montage 3' relié au ruban flexible 2' à l'une de ses extrémités 200' (ci-après extrémité non libre). Le corps de montage 3' est illustré plus clairement à la figure 9, et comprend une bride 4', un noyau 5' dépendant de la bride 4', un passage 6' pour recevoir l'extrémité libre (non représentée) du ruban flexible 2', un verrou 7' dépendant de la bride 4' et destiné à s'engager dans les dents du ruban flexible 2' lorsqu'elle est insérée dans le passage 6' et un dispositif de fixation 8' (représenté en figure 10) aussi dépendant de la bride 4' pour s'engager dans un panneau de véhicule afin de fixer le collier 1' au panneau.

Par exemple, l'extrémité non libre 200' du ruban flexible 2' est courbée afin de permettre un centrage par rapport au corps de montage 3' d'un ou plusieurs faisceau(x) de câbles lorsqu'il(s) sont pris dans et maintenus par le ruban flexible 2'. Cette courbure de l'extrémité non libre 200' du ruban flexible 2' permet ainsi d'optimiser le rayon de courbure de l'extrémité libre du ruban flexible 2' lorsque celle-ci est introduite dans l'entrée 60' du passage 6'.

Par exemple, les dents du ruban flexible présentent un pas de quelques millimètres, et par exemple un pas de 1 mm par exemple pour optimiser le serrage. Bien entendu tout autre pas de dents peut être mis en oeuvre (par exemple 1,5mm ou 2 mm). La bride 4' a la forme d'un disque tronconique 40', qui est relié à son sommet au ruban flexible 2' et qui s'écarte vers l'extérieur en direction du dispositif de fixation. Un canal de réception de ruban 41' permettant la réception du ruban flexible est formé dans la bride 4', et s'étend radialement à partir du passage 6'.

Le noyau 5' décrit un guide de ruban 51', qui s'étend de façon perpendiculaire par rapport au canal de réception de ruban 41' formé dans la bride 4'.

Le passage 6' comprend une entrée 60' et une section intermédiaire 61' qui est décrite entre le guide-ruban 51' et le verrou 7'. L'entrée 60' est prévue pour s'adapter à un rayon de courbure du ruban flexible 2'.

Le verrou 7' comprend un bras de verrouillage 70', qui dépend de la bride 4' et qui porte trois dents de verrouillage 71', 72', 73' pour s'engager avec les dents du ruban flexible 2'. Ainsi, par exemple, les dents de verrouillage 71', 72', 73' présentent un pas de quelques millimètres, et par exemple un pas de 1 mm par exemple pour optimiser le serrage. Bien entendu tout autre pas de dents de verrouillage peut être mis en oeuvre (par exemple 1,5mm ou 2 mm). Avantageusement, le pas des dents du ruban flexible est identique au pas des dents de verrouillage 71', 72', 73'. Il peut cependant être différent ou légèrement différent.

La dent de verrouillage 71' à l'extrémité libre du bras de verrouillage 70' s'étend à partir du bras de verrouillage 70' selon un angle, en s'éloignant de la bride 4'. La dent de verrouillage intermédiaire 72' s'étend selon un angle similaire, tandis que la dent de verrouillage proximale 73' fait saillie selon un angle qui est presque perpendiculaire au bras de verrouillage 70'.

Par exemple, le bras de verrouillage 70' est renforcé en épaisseur au niveau des dents de verrouillage 71', 72', 73'. Ceci permet d'éviter la déformation la dent de verrouillage 71' à l'extrémité libre du bras de verrouillage 70' lorsque que le bras de verrouillage est mis sous contrainte.

Par exemple, les dents de verrouillage 71', 72', 73' du bras de verrouillage 70' du collier de serrage selon le second mode de réalisation sont disposées au niveau de l'extrémité du bras de verrouillage 70'.

Ainsi, par rapport au premier mode de réalisation notamment des figures 1 et 2, les dents de verrouillage 71', 72', 73' du bras de verrouillage 70' du collier de serrage selon le second mode de réalisation sont décalée vers l'extrémité (extrémité distale de la bride 4') du bras de verrouillage. Sur la figure 8, les dents de verrouillage 71', 72', 73' du bras de verrouillage 70' sont plus basses que les dents de verrouillage 71, 72, 73 du bras de verrouillage 70 de la figure 2 par exemple. Ceci permet d'augmenter la tenue ou le maintien exercé par le bras de verrouillage 70' comparé au maintien exercé par le bras de verrouillage de la figure 2 (premier mode de réalisation).

Selon un mode de réalisation de l'invention, le verrou 7' est relié au corps de montage 3' via une région affaiblie 74' décrivant une charnière autour de laquelle le verrou 7' est capable de pivoter.

Ainsi, par exemple, le bras de verrouillage 70' comprend également la région affaiblie 74' qui est par exemple une partie rétrécie 74' entre la dent de verrouillage proximale 73' et sa connexion avec la bride 4'. Par exemple, la partie rétrécie 74' décrit une charnière autour de laquelle le verrou 7' est capable de pivoter. La partie rétrécie 74' est décrite par un évidement 76,qui s'étend dans le bras de verrouillage 70 du côté opposé à celui portant les dents de verrouillage 71', 72', 73'. L'évidement 76 est par exemple peu profond et large. Par exemple, l'épaisseur du bras de verrouillage 70' dans la partie rétrécie 74' est réduite de moins de la moitié.

La configuration de la partie rétrécie 74', en particulier la présence de l'évidement 76' encourage le verrou 7' à pivoter vers le ruban flexible 2' lorsqu'une force de rétraction est appliquée, en service, au ruban flexible 2'. Ceci, à son tour, pousse les dents de verrouillage 71', 72', 73' du verrou 7' à s'engager davantage avec les dents du ruban flexible 2'. L'angle de la dent de verrouillage 71' à l'extrémité libre du bras de verrouillage 70' encourage ce phénomène, agissant de concert avec la configuration de la partie rétrécie 74' pour le renforcer.

Plus précisément, l'entrée 60' est décrite entre le canal de réception de ruban 41', le verrou 7' et la partie supérieure du guide-ruban 51'. Comme l'illustre plus clairement la figure 9, cela permet au ruban flexible 2' de former un coude 201' plus graduel ayant un plus grand rayon de courbure.

Par exemple, le dispositif de fixation 8' comprend une paire de pieds d'ancrage opposés 80', qui s'étendent depuis une extrémité inférieure du noyau 5', vers la bride 4'. Le dispositif de fixation 8' est configuré pour être inséré, une fois le ruban flexible 2' verrouillé en place par le verrou 7', dans un trou d'un panneau de carrosserie de véhicule. Les pieds d'ancrage 80' sont alors poussés l'un vers l'autre jusqu'à ce qu'ils émergent du côté opposé du trou, où ils s'enclenchent en place pour s'engager dans le panneau. La distance entre les pieds d'ancrage 80' et la bride 4' amène également la bride 4' à s'engager dans le panneau et à solliciter les pieds d'ancrage pour qu'ils s'engagent dans la partie du panneau entourant le trou.

Tel qu'illustré par la figure 10, on peut mettre en oeuvre sur le corps de montage 3 ou 3' du collier de serrage 1 ou 1', au moins une nervure 400' et préférentiellement deux nervures 400' sur le dessus du corps de montage. Par exemple, le corps de montage comprend deux nervures disposées de part et d'autre de l'extrémité non libre du ruban flexible. De tels nervures permettent d'améliorer la tenue en translation et de guider le ruban flexible de sorte à optimiser le rayon de courbure global du ruban flexible une fois pris dans le corps de montage. De tels nervures Permettent également d'augmenter la distance entre le faisceau et l'entrée du passage.

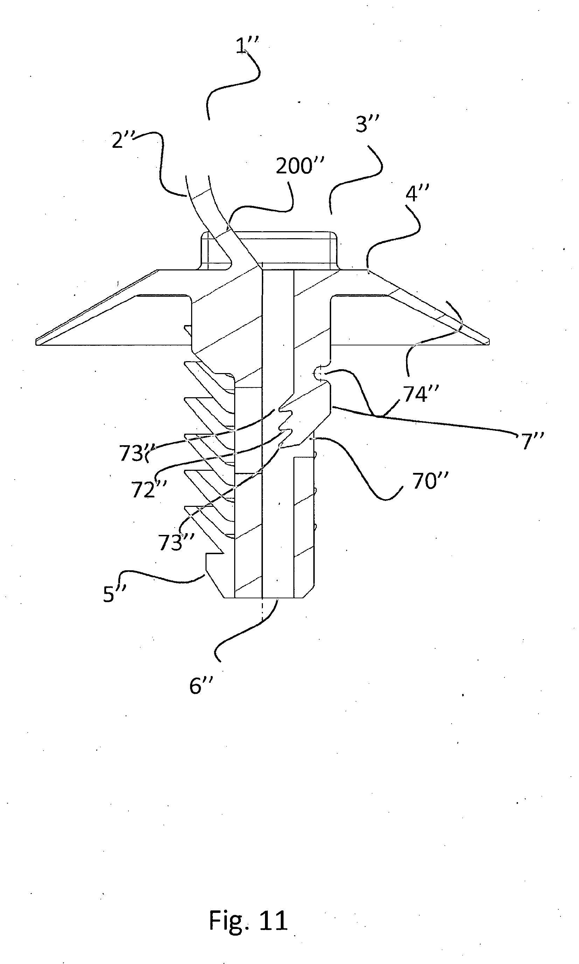

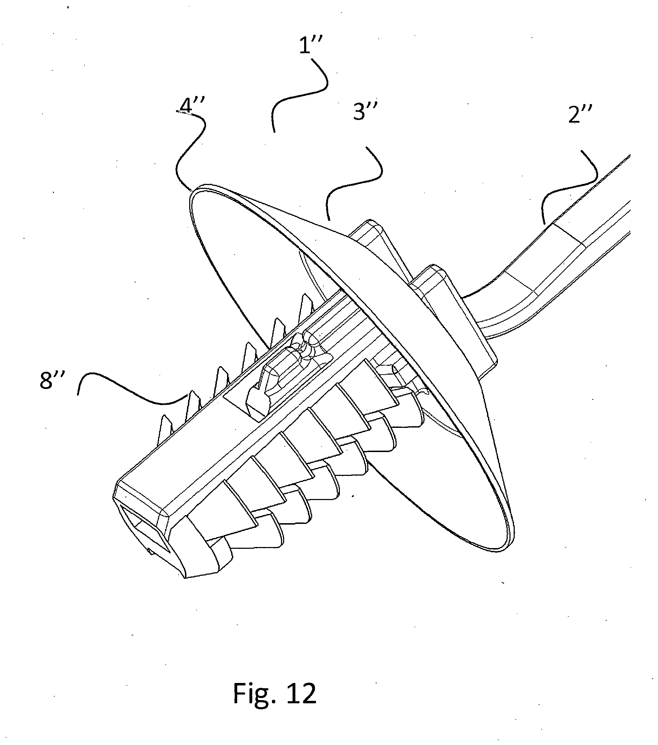

Les figures 11 et 12 illustrent un collier de serrage 1" selon un troisième mode de réalisation de l'invention. Un tel collier de serrage 1" permet de fixer un faisceau de câbles à un support. Un tel collier de serrage 1" est par exemple adapté pour un trou de diamètre 6,5mm réalisé dans le support. Le collier 1" comprend un ruban flexible 2" avec des dents (non représentées) sur une partie de sa longueur et un corps de montage 3' relié au ruban flexible 2" à l'une de ses extrémités 200" (ci-après extrémité non libre). Le corps de montage 3" comprend une bride 4", un noyau 5" dépendant de la bride 4", un passage 6" pour recevoir l'extrémité libre (non représentée) du ruban flexible 2", un verrou 7" dépendant de la bride 4" et destiné à s'engager dans les dents du ruban flexible 2" lorsqu'elle est insérée dans le passage 6" et un dispositif de fixation 8" (par exemple comprenant des dents ou des collerettes déformables) aussi dépendant de la bride 4" pour s'engager dans un panneau de véhicule afin de fixer le collier 1" au panneau.

Le verrou 7" comprend un bras de verrouillage 70", qui dépend de la bride 4" et qui porte trois dents de verrouillage 71", 72", 73" pour s'engager avec les dents du ruban flexible 2".

Selon un mode de réalisation de l'invention, le verrou 7" est relié au corps de montage 3" via une région affaiblie 74" décrivant une charnière autour de laquelle le verrou 7" est capable de pivoter.

L'homme du métier appréciera que plusieurs variantes des modes de réalisation précités soient envisageables sans sortir du cadre de l'invention.

## Revendications

1. Un collier de serrage (1) pour fixer un faisceau de câbles à un support, le collier comprenant :
un ruban flexible (2) avec des dents (20) sur au moins une partie de sa longueur;
un corps de montage (3) relié au ruban flexible (2) à l'une de ses extrémités, ci-après extrémité non libre, et comprenant un passage (6) pour recevoir l'autre extrémité du ruban flexible (2), ci-après extrémité libre (22) ;
un verrou (7) dépendant du corps de montage (3) et destiné à s'engager dans les dents (20) du ruban flexible (2) lorsqu'elle est insérée dans le passage (6) ; et
un dispositif de fixation (8) dépendant du corps de montage (3) pour s'engager dans un panneau de véhicule afin de fixer le collier (1) au panneau,
dans lequel :
le verrou (7) est relié au corps de montage (3) via une région affaiblie (74, 74', 74") décrivant une charnière autour de laquelle le verrou (7) est capable de pivoter ; et
le corps de montage (3) comprend un guide-ruban décrivant au moins une partie du passage;
**caractérisé en ce que** le corps de montage comprend un canal de réception pour le ruban flexible qui est perpendiculaire au guide-ruban.

2. Collier de serrage selon l'une quelconque des revendications précédentes, dans lequel le verrou (7) comprend un bras de verrouillage (70) dépendant du corps de montage (3) avec au moins une dent de verrouillage (71, 72, 73) pour s'engager avec les dents (20) du ruban flexible (2) et la région affaiblie (74) est fournie par une partie rétrécie du bras de verrouillage (70).

3. Collier de serrage selon la revendication 2, dans lequel la dent de verrouillage (71, 72, 73) fait saillie du bras de verrouillage (70) à un angle tel qu'une force de rétraction appliquée, en utilisation, au ruban flexible (2) lorsqu'il est engagé avec le verrou (7) pousse le bras de verrouillage (70) en prise supplémentaire avec le ruban flexible (2).

4. Collier de serrage selon la revendication 3, dans lequel le bras de verrouillage (70) comprend un évidement (75) sur le même côté que les dents de verrouillage.

5. Collier de serrage selon l'une quelconque des revendications 3 et 4, **caractérisé en ce que** le bras de verrouillage comprend un évidement (76) sur son côté opposé aux dents de verrouillage.

6. Collier de serrage selon l'une quelconque des revendications 2 à 5, **caractérisé en ce que** la ou les dents de verrouillage est(sont) disposées au niveau de l'extrémité du bras de verrouillage (70').

7. Collier de serrage selon l'une quelconque des revendications 2 à 5, **caractérisé en ce que** le bras de verrouillage (70') est renforcé en épaisseur au niveau des dents de verrouillage (71', 72', 73').

8. Collier de serrage selon l'une quelconque des revendications précédentes, **caractérisé en ce que** le ruban flexible présente une courbure en son extrémité non libre.

9. Collier de serrage selon l'une quelconque des revendications précédentes, **caractérisé en ce que** le passage (6) comprend une entrée élargie (60) pour s'adapter à un rayon de courbure du ruban flexible (2).

10. Collier de serrage selon l'une quelconque des revendications précédentes, **caractérisé en ce que** le passage (6) comprend une transition chanfreinée (760) depuis l'entrée élargie vers le verrou.

11. Collier de serrage selon l'une quelconque des revendications précédentes, **caractérisé en ce que** le passage (6) comprend une transition par palier (276, 376) depuis l'entrée élargie vers le verrou.

12. Collier de serrage selon l'une quelconque des revendications précédentes, **caractérisé en ce que** le corps de montage (3) comprend une bride (4) et le passage (6) est décrit entre le verrou (7) et le guide-ruban (51), le guide-ruban étant espacé de la bride pour créer une ouverture entre eux qui est plus étroite que l'extrémité libre (22) du ruban flexible (2).

13. Collier de serrage selon l'une quelconque des revendications précédentes, **caractérisé en ce que** le corps de montage (3, 3') comprend deux nervures (400') disposées de part et d'autre de l'extrémité non libre du ruban flexible.

## Patentansprüche

1. Kabelbinder (1) zum Anbringen eines Bündels von Kabeln an einer Tragstruktur, der Kabelbinder aufweisend:
ein flexibles Band (2) mit Zähnen (20) entlang zumindest eines Teils seiner Länge;
einen Montagekörper (3), der mit dem flexiblen Band (2) an einem seiner Enden verbunden ist, im Folgenden als das nicht freie Ende bezeichnet, und eine Durchgangsöffnung (6) zum Aufnehmen des anderen Endes des flexiblen Bandes (2), im Folgenden als das freie Ende (22) bezeichnet, aufweist;
einen Riegel (7), der von dem Montagekörper (3) abhängig ist und dazu ausgelegt ist, in die Zähne (20) des flexiblen Bandes (2) einzugreifen, wenn das Band in die Durchgangsöffnung (6) eingeführt wird; und
eine Befestigungsvorrichtung (8), die von dem Montagekörper (3) abhängig ist, um in eine Fahrzeugverkleidung einzugreifen, um den Kabelbinder (1) an der Verkleidung anzubringen,
wobei:
der Riegel (7) mit dem Montagekörper (3) über einen geschwächten Bereich (74, 74', 74") verbunden ist, der als Scharnier wirkt, um das der Riegel (7) schwenken kann; und
der Montagekörper (3) eine Bandführung aufweist, die zumindest einen Teil der Durchgangsöffnung abgrenzt;
**dadurch gekennzeichnet, dass** der Montagekörper einen Kanal senkrecht zu der Bandführung zur Aufnahme des flexiblen Bandes aufweist.

2. Kabelbinder nach einem der vorhergehenden Ansprüche, wobei der Riegel (7) einen von dem Montagekörper (3) abhängigen Verriegelungsarm (70) mit zumindest einem Verriegelungszahn (71, 72, 73) zum Eingreifen mit den Zähnen (20) des flexiblen Bandes (2) aufweist und der geschwächte Bereich (74) durch einen schmalen Teil des Verriegelungsarms (70) gebildet ist.

3. Kabelbinder nach Anspruch 2, wobei der Verriegelungszahn (71, 72, 73) von dem Verriegelungsarm (70) in einem solchen Winkel vorsteht, dass eine zurückziehende Kraft, die im Gebrauch auf das flexible Band (2) aufgebracht wird, wenn es mit dem Riegel (7) in Eingriff ist, den Verriegelungsarm (70) in weiteren Eingriff mit dem flexiblen Band (2) drückt.

4. Kabelbinder nach Anspruch 3, wobei der Verriegelungsarm (70) eine Ausnehmung (75) auf der gleichen Seite wie die Verriegelungszähne aufweist.

5. Kabelbinder nach einem der Ansprüche 3 und 4, **dadurch gekennzeichnet, dass** der Verriegelungsarm auf seiner den Verriegelungszähnen gegenüberliegenden Seite eine Ausnehmung (76) aufweist.

6. Kabelbinder nach einem der Ansprüche 2 bis 5, **dadurch gekennzeichnet, dass** der Verriegelungszahn oder die Verriegelungszähne am Ende des Verriegelungsarms (70') angeordnet ist (sind).

7. Kabelbinder nach einem der Ansprüche 2 bis 5, **dadurch gekennzeichnet, dass** die Dicke des Verriegelungsarms (70') an den Verriegelungszähnen (71', 72', 73') verstärkt ist.

8. Kabelbinder nach einem der vorhergehenden Ansprüche, **dadurch gekennzeichnet, dass** das flexible Band an seinem nicht freien Ende gekrümmt ist.

9. Kabelbinder nach einem der vorhergehenden Ansprüche, **dadurch gekennzeichnet, dass** die Durchgangsöffnung (6) einen vergrößerten Einlass (60) zum Aufnehmen eines Biegeradius des flexiblen Bandes (2) aufweist.

10. Kabelbinder nach einem der vorhergehenden Ansprüche, **dadurch gekennzeichnet, dass** die Durchgangsöffnung (6) einen abgeschrägten Übergang (760) von dem vergrößerten Einlass zu dem Riegel aufweist.

11. Kabelbinder nach einem der vorhergehenden Ansprüche, **dadurch gekennzeichnet, dass** die Durchgangsöffnung (6) einen stufenförmigen Übergang (276, 376) von dem vergrößerten Einlass zu dem Riegel aufweist.

12. Kabelbinder nach einem der vorhergehenden Ansprüche, **dadurch gekennzeichnet, dass** der Montagekörper (3) einen Flansch (4) aufweist und die Durchgangsöffnung (6) zwischen dem Riegel (7) und der Bandführung (51) begrenzt ist, wobei die Bandführung von dem Flansch beabstandet ist, um zwischen ihnen eine Öffnung zu schaffen, die schmaler als das freie Ende (22) des flexiblen Bandes (2) ist.

13. Kabelbinder nach einem der vorhergehenden Ansprüche, **dadurch gekennzeichnet, dass** der Montagekörper (3, 3') zwei Rippen (400') aufweist, die beiderseits des nicht freien Endes des flexiblen Bandes angeordnet sind.

## Claims

1. A cable tie (1) for attaching a bundle of cables to a support structure, the cable tie comprising:
a flexible strap (2) with teeth (20) along at least part of its length;
a mounting body (3) connected to the flexible strap (2) at one of its ends, hereinafter referred to as the non-free end, and comprising a through-opening (6) for receiving the other end of the flexible strap (2), hereinafter referred to as the free end (22);
a latch (7) depending from the mounting body (3) and designed to engage in the teeth (20) of the flexible strap (2) when the strap is inserted into the through-opening (6); and
a fastening device (8) depending from the mounting body (3) to engage in a vehicle panel in order to attach the cable tie (1) to the panel,
in which:
the latch (7) is connected to the mounting body (3) via a weakened area (74, 74', 74") acting as a hinge around which the latch (7) can pivot; and
the mounting body (3) comprises a strap guide delineating at least part of the through-opening;
**characterized in that** the mounting body comprises a channel perpendicular to the strap guide for receiving the flexible strap.

2. The cable tie according to any of the preceding claims, in which the latch (7) comprises a locking arm (70) depending from the mounting body (3) with at least one locking tooth (71, 72, 73) for engaging with the teeth (20) of the flexible strap (2) and the weakened area (74) is provided by a narrow part of the locking arm (70).

3. The cable tie according to claim 2, in which the locking tooth (71, 72, 73) protrudes from the locking arm (70) at an angle such that a retracting force applied, when in use, to the flexible strap (2) when it is engaged with the latch (7) pushes the locking arm (70) into further engagement with the flexible strap (2).

4. The cable tie according to claim 3, in which the locking arm (70) comprises a recess (75) on the same side as the locking teeth.

5. The cable tie according to any of claims 3 and 4, **characterized in that** the locking arm comprises a recess (76) on its side opposite the locking teeth.

6. The cable tie according to any of claims 2 to 5, **characterized in that** the locking tooth or teeth is (are) arranged at the end of the locking arm (70').

7. The cable tie according to any of claims 2 to 5, **characterized in that** the thickness of the locking arm (70') is reinforced at the locking teeth (71', 72', 73').

8. The cable tie according to any of the preceding claims, **characterized in that** the flexible strap is curved at its non-free end.

9. The cable tie according to any of the preceding claims, **characterized in that** the through-opening (6) comprises an enlarged inlet (60) to accommodate a bend radius of the flexible strap (2).

10. The cable tie according to any of the preceding claims, **characterized in that** the through-opening (6) comprises a chamfered transition (760) from the enlarged inlet to the latch.

11. The cable tie according to any of the preceding claims, **characterized in that** the through-opening (6) comprises a stepped transition (276, 376) from the enlarged inlet to the latch.

12. The cable tie according to any of the preceding claims, **characterized in that** the mounting body (3) comprises a flange (4) and the through-opening (6) is delineated between the latch (7) and the strap guide (51), the strap guide being spaced apart from the flange to create an opening between them that is narrower than the free end (22) of the flexible strap (2).

13. The cable tie according to any of the preceding claims, **characterized in that** the mounting body (3, 3') comprises two ridges (400') arranged on either side of the non-free end of the flexible strap.
